# EUROPÄISCHE PATENTSCHRIFT

(11) **EP 0 482 036 B1**
(45) Veröffentlichungstag und Bekanntmachung des Hinweises auf die Patenterteilung: **14.04.1993**
(21) Anmeldenummer: 90910588.4
(22) Anmeldetag: 11.07.1990
(51) Int. Cl.: B65D 81/08, B65D 30/24

(54) **AUFBLASBARER FOLIENBEUTEL, INSBESONDERE FÜR VERPACKUNGSZWECKE**
INFLATABLE FOIL SACHET, ESPECIALLY FOR PACKAGING PURPOSES
SACHET GONFLABLE EN FEUILLES PLASTIQUES, EN PARTICULIER A DES FINS D'EMBALLAGE

(30) Priorität: 11.07.1989 DE 3922802
(43) Veröffentlichungstag der Anmeldung: 29.04.1992
(73) Patentinhaber: Becker, Gudrun, D-53819 Neunkirchen (DE)
(72) Erfinder: BECKER, Rolf, (DE); BECKER, Wolfram, D-74653 Künzelsau (DE)
(74) Vertreter: Haft, von Puttkamer, Berngruber, Czybulka
(86) Internationale Anmeldenummer: DE9000516
(87) Internationale Veröffentlichungsnummer: WO9100834

(56) Entgegenhaltungen:
- CH-A- 407 866
- DE-B- 1 265 036
- DE-C- 3 812 306
- FR-A- 2 291 114
- GB-A- 1 035 248
- US-A- 2 696 342
- US-A- 3 180 558
- US-A- 4 076 872

## Beschreibung

Die Erfindung bezieht sich auf einen aufblasbaren Folienbeutel insbesondere für Verpackungszwecke.

Aus der DE-OS 37 05 167 ist ein Folienbeutel aus dünner Kunststoffolie bekannt, der zumindest eine Kammer aus einer Ober- und einer Unterfolie aufweist, die durch eine geschlossenlinige Naht miteinander verbunden sind. Durch alle Kammern des Folienbeutels verläuft ein schmaler, in seinen Abmessungen gegenüber der Kammer kleiner Schlauch ebenfalls aus einer dünnen Folie, der an den Durchtrittsstellen in die Kammer an den Nähten für ein Füllmedium, im allgemeinen Luft durchlässig verbleibt. Der Schlauch selbst hat öffnungen, z.B. Perforationen, durch die beim Füllen des Beutels Luft in die Kammer eintritt. Ist die Kammer gefüllt, so wird der Folienschlauch durch den Innendruck in der Kammer zusammengepreßt, so daß die öffnungen selbsttätig verschließen.

Die Nähte, mit denen Ober- und Unterfolie miteinander verbunden werden, sind vorzugsweise Schweißnähte, wobei an den Durchtrittsstellen des Schlauches während des Schweißvorganges lediglich die Außenwände des Schlauches mit den Folien verschweißt werden, der Folienschlauch jedoch an diesen Durchtrittsstellen luftdurchlässig bleibt. Dies kann durch eine Präparation des Folienschlauches erfolgen, indem die Innenwände des Folienschlauches z.B. mit einem Medium benetzt sind, das eine solche Verschweißung verhindert, oder durch eine zusätzliche Thermofolie innerhalb des Schlauches, die einen höheren Schmelzpunkt als das Material der Schlauchaußenwand aufweist.

Als weiterer Stand der Technik seien das US-Patent 4,076,872 sowie die französische Patentschrift 2 291 114 genannt.

In dem US-Patent 4,076,872 ist ein Folienbeutel beschrieben, der aus einer oberen vorbearbeiteten Außenfolie und mehreren, vorzugsweise drei unteren Deckfolien besteht. Die obere Außenfolie wird durch Hitze oder Vakuum vorgeformt, so daß sich kissenförmige Hohlräume bilden. Die erste auf der Unterseite der oberen Außenfolie angeordnete Deckfolie weist an einer Seite einen Zug von kleinen Öffnungen auf, die parallel zu dem Rand dieser Folie verlaufen. Die anschließende zweite Deckfolie weist auf der gegenüberliegenden Seite ebenfalls einen Zug von größeren Öffnungen auf, wohingegen die unterste Deckfolie eine geschlossenflächige Folie ist. Sämtliche Folien werden längs der Ränder miteinander verschweißt. Der Folienbeutel wird dadurch aufgeblasen, daß Luft zwischen die beiden unteren Deckfolien eingeblasen wird, die durch die Öffnungen der mittleren Folie in den Zwischenraum zwischen dieser und der ersten Deckfolie eintritt und über deren kleinen Öffnungen in die Kammern einströmt.

Dieser Folienbeutel soll im wesentlichen dadurch verschlossen gehalten werden, daß durch den hohen Innendruck die erste Deckfolie mit den kleinen Öffnungen gegen die darunterliegende Deckfolie gepreßt wird. Im wesentlichen wird jedoch der Verschlußeffekt durch den Strömungswiderstand zwischen den einzelnen Deckfolien, d. h. zwischen den kleinen Öffnungen der ersten und den großen Öffnungen der mittleren Deckfolie und von dort in den Raum zwischen der mittleren und der untersten Deckfolie bestimmt. Da der Strömungsweg vom Kammerinneren nach außen relativ gerade verläuft, kann der Folienbeutel durchaus mit entsprechenden, auch in der Praxis auftretenden Kräften leergedrückt werden.

Der in der französischen Patentschrift 2 291 114 beschriebene Folienbeutel weist einen am-Rand des Beutels verlaufenden Kanal zum Füllen des Beutels auf, von dem ein in das Kammerinnere hängender Luftschlauch abzweigt, in dem die Luft aufwendig mäanderförmig, sozusagen schikaneartig durch mehrere aneinandergesetzte Schläuche läuft. Nach dem Aufblasen des Folienbeutels wird dieser in das Kammerinnere hängende Schlauch durch den Kammerinnendruck flach zusammengedrückt, so daß das Ausströmen von Luft verhindert wird. Auch bei diesem Folienbeutel wird das Ausströmen von Luft insbesondere durch den Strömungswiderstand zwischen dem Kammerinneren und der Atmosphäre gebildet, der zwar durch die Luftführung in dem Schlauch relativ groß ist, jedoch ein Ausdrücken von Luft nicht verhindern kann, insbesondere dann nicht, wenn der Druckunterschied zwischen dem Kammerinneren und der Außenatmosphäre relativ gering ist.

Bei beiden bekannten Folienbeuteln ist somit das Problem der einwandfreie Verschluß, insbesondere dann, wenn auf den Folienbeutel starke langandauernde oder starke schockartige Kräfte wirken. Bei den herkömmlichen Konstruktionen kann hierbei nicht ausgeschlossen werden, daß zumindest ein Teil der Luft in den Folienbeuteln abströmt, so daß die Verpackungswirkung, hinsichtlich einer sicheren Halterung und eines sicheren Schutzes des Objektes reduziert wird. Außerdem ist häufig die Herstellung kompliziert.

Der Erfindung liegt die Aufgabe zugrunde, einen Folienbeutel der in Rede stehenden Art anzugeben, dessen Herstellung vereinfacht ist und der unter praktisch allen Betriebsbedingungen ein Ausströmen des Füllmediums, d. h. der Luft, sicher verhindert.

Dies wird dadurch erreicht, daß vom Kanal mit der Kammerfolie verbundene Kanalabzweigungen in jede Kammer führen, die bei jeder Kammer in der Nähe einer Naht gelegen sind, und daß dort die Öffnungen in die Kammern vorgesehen sind, und zwar in Bereichen, in denen bei aufgeblasenem Folienbeutel die stärksten Krümmungen sowie die meisten Knicke und Falten auftreten; hierdurch werden die Kanalabzweigungen mehrfach abgeknickt, so daß die -Verschlußwirkung ausgezeichne! ist. Vorzugsweise sind die Kanalabzweigungen mit den Öffnungen jeweils im Bereich der Ecken der Kammern gelegen.

Vorzugsweise wird der Kanal zum Füllen der Kammern außerhalb der längsverlaufenden Randnaht der Kammern angeordnet. Insbesondere hierdurch kann eine gleichmäßige Befüllung auch einer Vielzahl von aneinandergereihten Kammern gewährleistet werden. Zudem besteht hierbei die Möglichkeit, zu beiden Seiten dieses Kanales je einen Folienbeutel anzuordnen, so daß Folienbeutel mit einer Vielzahl von Kammern hergestellt werden können, wobei die Folienbeutel gleichzeitig sehr flexibel sind und an das zu verpackende und zu schützende Objekt formmäßig gut angepaßt werden können.

Weitere Ausgestaltungen der Erfindung gehen aus den Unteransprüchen hervor. Die Erfindung ist in Ausführungsbeispielen anhand der Zeichnung näher erläutert. In dieser stellen dar:
- Fig. 1: eine schematische Draufsicht auf einen Folienbeutel zur Erläuterung der Erfindung, aus der jedoch die erfinderischen Merkmale noch nicht ersichtlich sind, mit drei Kammern und einem auf die Außenseite des Folienbeutels aufgeklebten Folienstreifen zur Bildung eines Kanales und einer Kanalabzweigung;
- Fig. 2: eine Draufsicht auf einen Teil des Folienstreifens mit einer Darstellung des Kanales und der Kanalabzweigung;
- Fig. 3a und 3b: sowie 4a, 4b und 5a, 5b jeweils eine Draufsicht auf einen Teil eines Folienbeutels bzw. einen Teilschnitt durch den Folienbeutel;
- Fig. 6 bis 8: jeweils schematische Darstellungen von Folienbeuteln und
- Fig. 9a und 9b: schematische Darstellungen eines Stabes zum Aufblasen von Folienbeuteln.

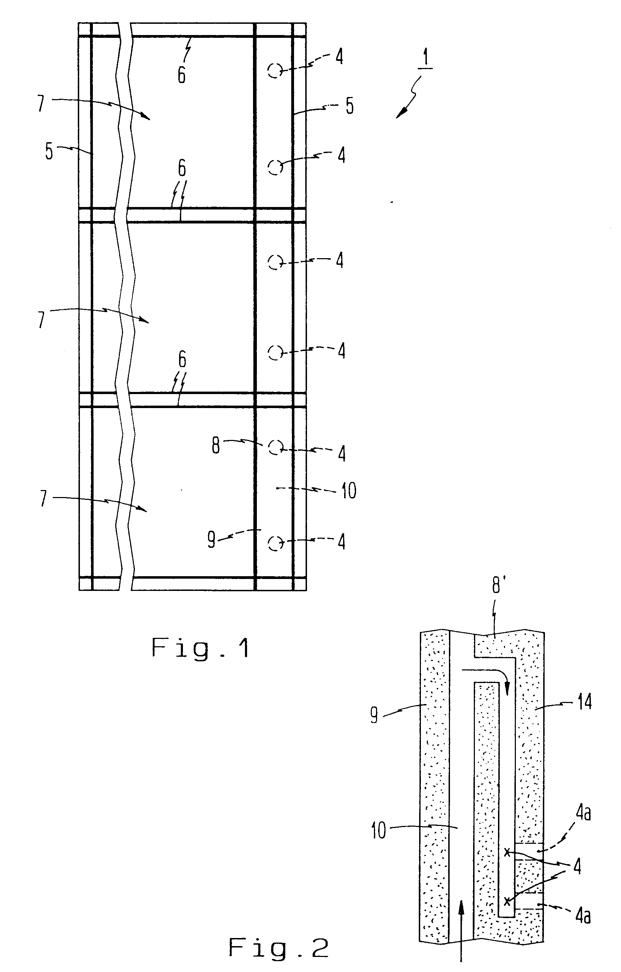

Ein Folienbeutel 1 gemäß Fig. 1 weist eine Oberfolie 2 und eine Unterfolie 3 auf, die beide z. B. aus Polyethylen sind. Längs einer Reihe, am Rande der Folienbahnen werden in die Oberfolie 2 Öffnungen 4 eingestochen. Die beiden Folien werden gemäß Fig. 2 aufeinandergelegt und durch Längsschweißnähte 5 an den Rändern und Querschweißnähte 6 in drei gegeneinander abgedichtete Kammern 7 aufgeteilt. Zwischen benachbarten Kammern sind jeweils zwei parallele Querschweißnähte 6 vorgesehen, so daß der Beutel an diesen Stellen ohne Behinderung geknickt werden kann. Die Öffnungen 4 liegen jeweils in oder zwischen den Ecken der Kammern 7. Über die gesamte Länge des Folienbeutels im Bereich der Öffnungen verläuft eine streifenförmige Folie 8, die z. B. mit Hilfe eines Klebers 9 aufgeklebt oder mit der Oberfolie verschweißt ist. In einem Bereich oberhalb der Öffnungen 4 sind Folien 2 und Folienstreifen 8 nicht miteinander verbunden, so daß ein Kanal 10 frei bleibt, der über die gesamte Länge des Folienbeutels verläuft. In ein Ende dieses Kanales kann z. B. ein Aufblasstab gesteckt werden, der an einen Kompressor angeschlossen ist. Wird das andere Ende des Kanales verschlossen und der Kompressor eingeschaltet, so strömt Luft durch die Öffnungen 4 in die Kammern 7 des Folienbeutels, die sich dadurch kissenförmig aufblähen. Sind die Kammern 7 ausreichend gefüllt, so wird der Kompressor abgeschaltet. Durch den Innendruck im Beutel wird die Oberfolie 2 gegen die streifenförmige Folie 8 gepreßt und der Kanal 10 nach außen verschlossen. Der Verschlußeffekt wird noch dadurch verstärkt, daß die Öffnungen 4 in einem Bereich liegen, wo der Folienbeutel durch das Aufblasen stark verformt und gekrümmt wird und dadurch Falten sowie Knicke aufweist, die zusätzlich den Kanal 10 absperren. Auch bei hohen Drucken auf den Beutel bleibt der Verschluß erhalten. Der Verschlußeffekt wird um so geringer, je mehr man den Hauptkanal 10 von der Schweißnaht 5 entfernt.

Der Folienstreifen 8 kann auch auf die Unterfolie 3 aufgebracht, z. B. geklebt oder geschweißt werden, wobei die Öffnungen in dem Folienstreifen vorgesehen werden oder die Luft durch eine Unterbrechung in der Schweißnaht in den Folienbeutel gelangt.

An den Durchtrittsstellen des Folienstreifens durch die Querschweißnähte muß dann dafür gesorgt werden, daß der Kanal für die Aufblasluft durchgängig verbleibt.

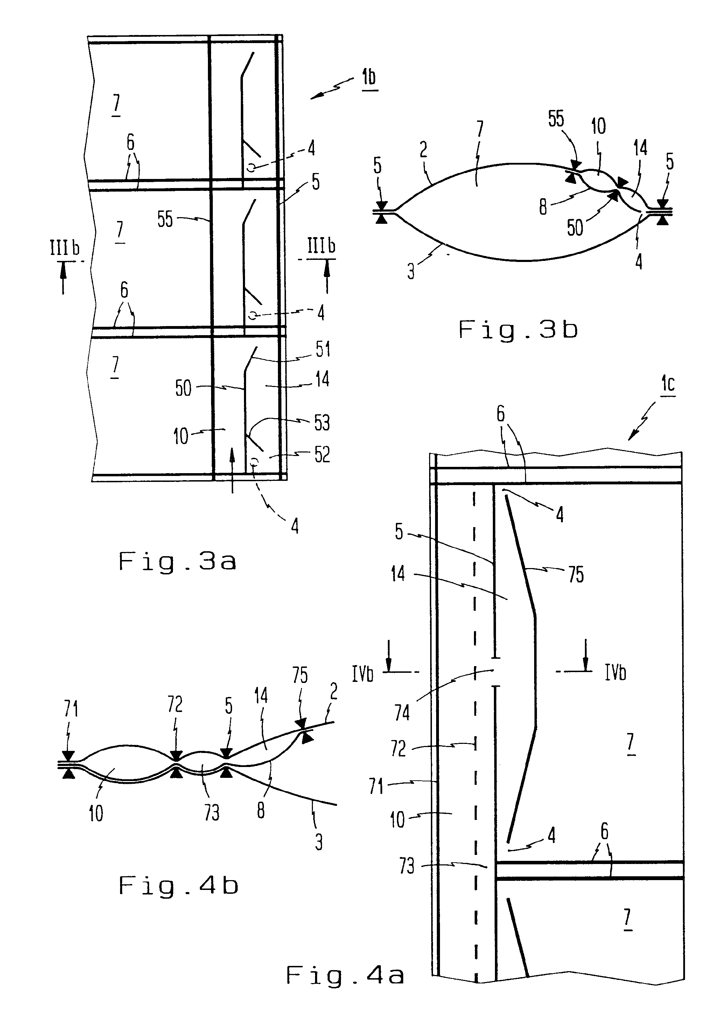

In Fig. 2 ist ein Teilstück des Folienstreifens 8 im Bereich einer Kammer 7 dargestellt, der mit einem Kleber 9 mit einer der Kammerfolien verbunden wird. Der Kleber 9 ist so aufgebracht, daß sich für jede Kammer ein Kanalmuster aus dem in Längsrichtung des Folienstreifens 8 verlaufenden Kanal 10, im folgenden Hauptkanal genannt, und einer Kanalabzweigung 14, d. h. einem von dem Hauptkanal 10 abzweigenden und dann parallel laufenden Nebenkanal ergibt. Der Nebenkanal 14 ist so angeordnet, daß beim Aufblasen des Folienbeutels, angedeutet durch den Pfeil im Hauptkanal 10, die Luft in dem Nebenkanal 14 entgegengerichtet strömt. An den mit Kreuzen angedeuteten Stellen am Ende des Nebenkanals 14 werden die Öffnungen 4 zu der Kammer vorgesehen, die wie oben in der Ecke der jeweiligen Kammer angeordnet werden. Im Falle, daß der Folienstreifen innerhalb der Kammer auf die Unterfolie aufgebracht ist, können auch, wie gestrichelt in Fig. 3 angedeutet, vom Nebenkanal 14 zum Rand des Folienstreifens 8 verlaufende Stichkanäle 4a vorgesehen werden, in deren Bereich der Folienstreifen nicht mit der Unterfolie verbunden wird. Dann tritt durch diese Stichkanäle bzw. Öffnungen 4a die Luft in die Kammern 7 ein. Selbstverständlich kann ein solches Kanalmuster zwischen den Folienstreifen und einer der Kammerfolien auch durch entsprechend angeordnete Schweißnähte erzeugt werden.

In den Fig. 3a und 3b ist ein modifizierter Folienbeutel 1b mit drei Kammern 7 gezeigt. Zum Aufblasen der Kammern ist ein alle Kammern 7 durchlaufender Kanal, d. h. Hauptkanal 10 vorgesehen, von dem in jeder Kammer ein durch eine Schweißnaht 50 abgetrennter paralleler Nebenkanal 14, d. h. eine Kanalabzweigung, ausgeht. Die Kanalanordnung liegt längs des Randes des Folienbeutels. Der Hauptkanal 10, der einseitig durch eine durchlaufende Längsschweißnaht 55 abgeschlossen ist, verbleibt an den Durchtrittsstellen durch die Quernähte 6 zwischen den einzelnen Kammern durchlässig, während die Nebenkanäle 14 dort abgeschlossen sind. Der Kanal 10 ist an seinen Durchtrittsstellen an den Quernähten 6 jeweils durch eine Art Schleuse 51 verbreitert, die in den Nebenkanal 14 führt und durch Abschrägen der Schweißnaht 50 gebildet wird. Wird Luft in den Hauptkanal 10, wie durch den Pfeil angedeutet, eingeleitet, so tritt diese in den Nebenkanal ein und gelangt schließlich zu der Öffnung 4 in der Ecke des Folienbeutels direkt neben der Einblasstelle. Kurz vor der Öffnung 4 kann in den Nebenkanal noch eine Engstelle 52 vorgesehen werden, die z. B. durch eine schräge Schweißnaht 53 erzeugt wird. Hierdurch wird der Schließeffekt vergrößert, da die größte Falte, die das Schließen des Kanales bewirkt, nahe bzw. in der Ecke zustandekommt. Die Herstellung erfolgt mit einer Oberfolie 2, einer Unterfolie 3 und einem Folienstreifen 8, innerhalb dessen Bereiches die Kanäle vorgesehen sind. Alle drei Folien sind außen am Rand durch die Schweißnaht untereinander verbunden, der Folienstreifen 8 ist durch die zwei Schweißnähte 50 und 55 mit einer der Kammerfolien, in diesem Falle der Oberfolie 2 verbunden. Ebenso ist es möglich, die Kanalanordnung durch entsprechendes Verschweißen auf zwei Folienstreifen vorzufabrizieren, und dann die Ober- und Unterfolie 2, 3 jeweils mit einem Längsrand der vorfabrizierten Kanalanordnung zu verschweißen.

In den Fig. 4a und 4b ist ein weiterer Folienbeutel 1c mit mehreren Kammern 7 dargestellt. Angedeutet sind die die Kammern 7 begrenzenden Längsschweißnähte 5 sowie die Querschweißnähte 6. Jenseits der in diesem Falle linken Längsschweißnaht 5 verläuft der Hauptkanal 10, der am Rande durch eine Längsschweißnaht 71 begrent ist. Der Hauptkanal 10 ist durch eine unterbrochene Längsschweißnaht 72 nochmals unterteilt, so daß ein Zwischenkanal 73 zwischen dem Hauptkanal 10 und der Längsschweißnaht 5 gebildet wird. Die Längsschweißnaht 5 weist eine Öffnung 74 auf, so daß dort Luft aus dem Zwischenkanal in einen im Folienbeutel liegenden Nebenkanal 14 einströmen kann. Der Nebenkanal 14 ist durch eine Längsschweißnaht 75 begrenzt, die in Richtung auf die Kammerecken sich an diese annähert, so daß hier die Öffnungen 4 zwischen dem Nebenkanal 14 und der Kammer 7 entstehen.

Aus Fig. 4b ist ersichtlich, daß der Folienbeutel im Kanalbereich aus der Oberfolie 2, der Unterfolie 3 und einem Folienstreifen 8 gebildet wird, wobei der Folienstreifen zwischen die beiden Folien gelegt und mit diesen wie oben geschildert verschweißt ist.

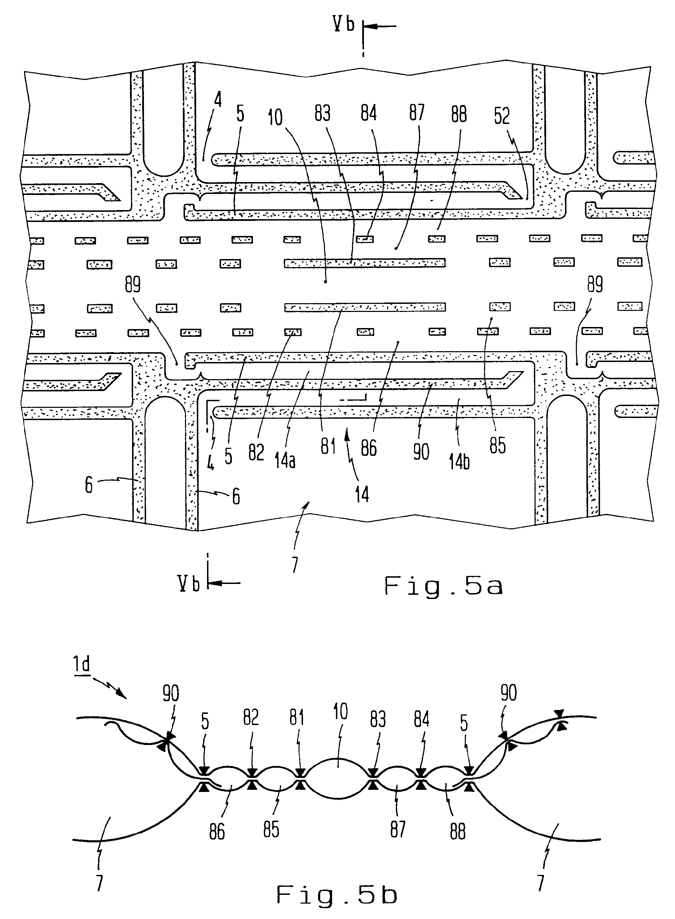

In den Fig. 5a und 5b ist ein Doppelbeutel 1d aus zwei Folienbeuteln dargestellt, die miteinander über die Kanalanordnung verbunden sind. Die Kanalanordnung besteht aus einem mittigen Hauptkanal 10, zu dessen beiden Seiten durch unterbrochene Längsschweißnähte 81, 82, 83 und 84 voneinander abgetrennte Zwischenkanäle 85 und 86 bzw. 87 und 88 anschließen. Im Bereich der Querschweißnähte 6 sind die Längsschweißnähte 5 des Folienbeutels unterbrochen, so daß hier eine Verbindung 89 zu einem Nebenkanal 14 entsteht, wobei der Nebenkanal 14 aus zwei durch eine Schweißnaht 90 voneinander abgetrennten Kanäle 14a und 14b besteht, die durch eine Engstelle 52 in der einen Ecke der Kammer 7 miteinander verbunden sind. Am Ende des Kanales 14b ist die Öffnung 4 in die Kammern wiederum in der Kammerecke vorgesehen, so daß diese Öffnung 4 etwa der Eintrittsöffnung 89 gegenüberliegt. Die Luft, die in den Hauptkanal 10 eingeblasen und von diesem gleichmäßig über die Zwischenkanäle 85 bis 88 verteilt wird, wird in den Kanälen 14a und 14b in einer Schleife, die in diesem Falle über die gesamte Kammerlänge führt, in die Kammer geleitet.

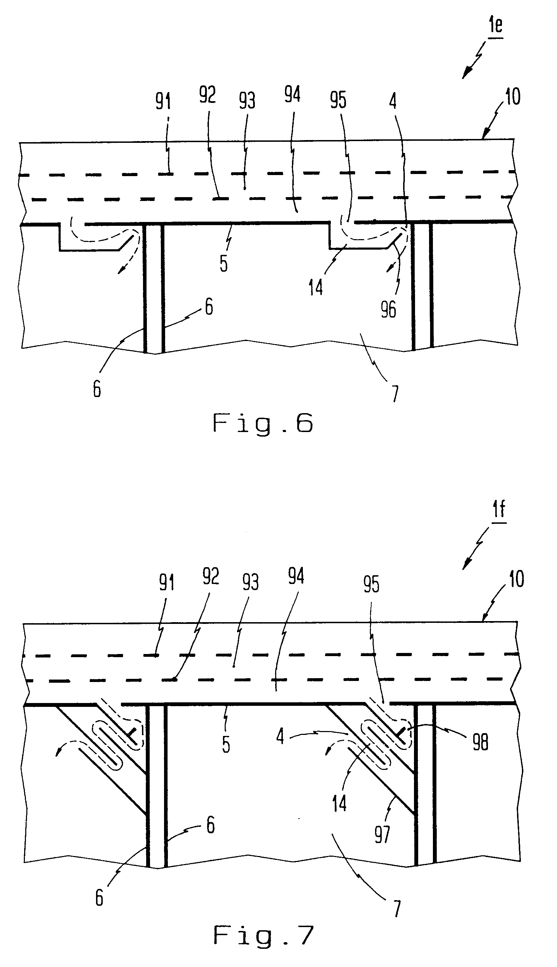

In Fig. 6 ist die Draufsicht auf einen Teil eines Folienbeutels 1e dargestellt. Auch hier liegt der Hauptkanal 10 außerhalb der Kammern parallel zu deren Längsschweißnaht 5. Der Hauptkanal ist durch unterbrochene Schweißnähte 91 und 92 wie bei dem obigen Ausführungsbeispiel unterteilt, so daß sich in Richtung auf den Rand der Kammern Zwischenkanäle 93 und 94 ergeben. Die Längsschweißnaht 5 ist wiederum unterbrochen, so daß eine Einströmöffnung 95 vom Zwischenkanal 94 in die Kammer 7 gebildet wird. Von dieser Einströmöffnung 95 ist ein kurzer Nebenkanal 14 in Richtung auf die Kammerecke geführt, wobei dieser Nebenkanal 14 an seinem Ende im Bereich der Kammerecke durch eine schräge Schweißnaht 96 verengt wird, so daß sich dort eine enge Öffnung 4 in die Kammer 7 ergibt. Dort werden bei aufgeblasenem Folienbeutel eine oder mehrere Falten gebildet, die den Nebenkanal 14 sicher nach außen abschließen.

In Fig. 7 ist ein Folienbeutel 1f dargestellt, dessen Hauptkanal 10 ebenso wie bei dem Ausführungsbeispiel gemäß Fig. 6 aufgebaut ist und demnach zwei Zwischenkanäle 93 und 94 aufweist. Die die Kammern 7 begrenzende Längsnaht ist im Bereich einer Ecke unterbrochen, so daß eine Einströmöffnung 95 entsteht. Von dieser Einströmöffnung 95 geht ein mäanderförmig gestalteter Nebenkanal 14 aus, der durch kammartig ineinandergreifende Schweißnähte 97 gebildet wird. Am Anfang des Kanales 14 ist eine Engstelle 98, am Ende dieses Kanales in der Nähe der Ecke die Öffnung 4 in das Kammerinnere vorgesehen. bei diesem Ausführungsbeispiel sieht man deutlich, daß beim Aufblasen des Folienbeutels durch die kissenartige Verformung der Kammern in dem Bereich des Nebenkanales 14 der Beutel so stark verformt, geknickt und gefaltet wird, daß ein sicherer Verschluß gewährleistet ist.

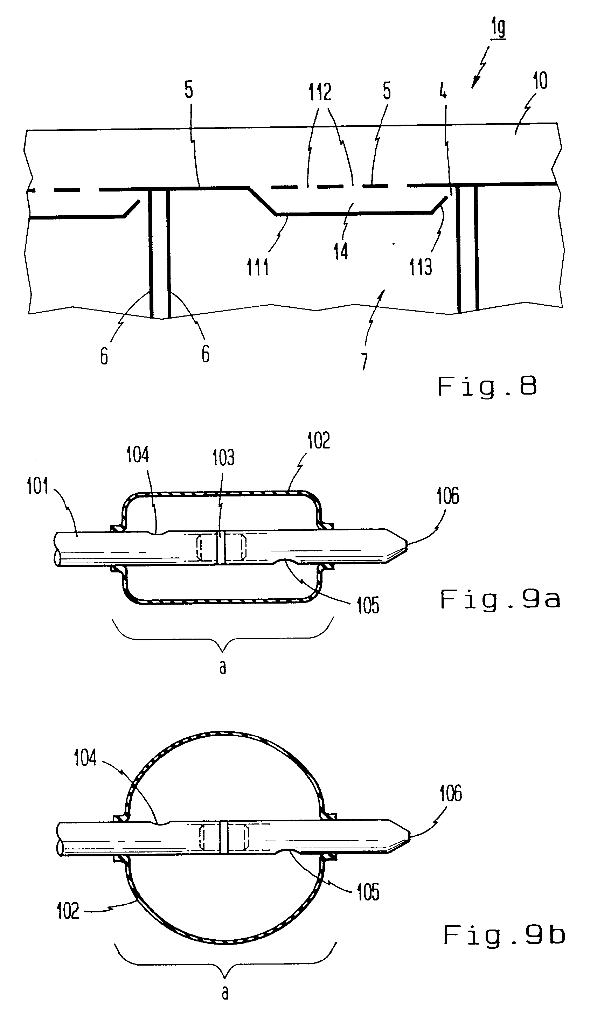

In Fig. 8 ist ein Teil eines Folienbeutels 1g dargestellt, der parallel zur Längsnaht 5 einen außerhalb der Kammer gelegenen Hauptkanal 10 aufweist. Ähnlich wie bei dem Ausführungsbeispiel gemäß Fig. 8 liegt im Bereich der Kammern auf der anderen Seite der Längsnaht 5 ein Nebenkanal 14, der durch eine Längsnaht 111 begrenzt wird. Die Längsnaht 5 des Folienbeutels ist im Bereich des Nebenkanales 14 an mehreren Stellen unterbrochen, so daß hier Eintrittsstellen 112 in den Nebenkanal 14 vorliegen. Der Nebenkanal 14 ist wiederum bis in eine Ecke der Kammer geführt und weist dort eine durch eine Schrägnaht 113 gebildete Engstelle auf. Dort liegt auch die Öffnung 4 des Nebenkanales 14 in die Kammer 7. Bei dieser Ausführungsform ist durch die Beschränkung auf die nur notwendigsten Schweißnähte eine nur geringe Schweißenergie erforderlich.

In den Fig. 9a und 9b ist das vordere Ende eines metallenen Aufblasstabes 101 dargestellt. Kurz vor dem Ende des Aufblasstabes ist im Bereich a eine Gummiummantelung 102 vorgesehen, die auf beiden Seiten mit dem Stab fest verbunden ist. Mitten im Bereich a ist der Stab z. B. durch eine Trennwand 103 luftundurchlässig gemacht. Vor und hinter dieser Trennwand 103 sind Öffnungen 104 und 105 in den Stab eingebohrt, wobei die Öffnung 105 größer als die Öffnung 104 ist. Die Austrittsstelle 106 an der Spitze des Stabes ist stufenlos einstellbar.

Strömt die Luft durch den Stab 101, dann tritt sie durch die Öffnung 104 aus, bläht die Gummiummantelung 102 auf und tritt durch die Öffnung 105 wieder in den Stab, um dann durch die Ausströmöffnung 106 zu entweichen. Je nach der Einstellung der Ausströmöffnung 106 ist der Blähbereich, d. h. das Volumen der Gummiummantelung 102 größer oder kleiner. Der Aufblasstab 101 wird mit seinem konischen vorderen Ende in den Hauptkanal 10 eines Folienbeutels gesteckt.

## Patentansprüche

1. Aufblasbarer Folienbeutel, insbesondere für Verpackungszwecke, mit zumindest einer Kammer aus einer Ober- und einer Unterfolie (Kammerfolien), die durch eine geschlossenlinige Naht miteinander verbunden sind, mit einem in der Nähe des Randes des Folienbeutels (1) verlaufenden Kanal zum Füllen der Kammern mit einem Füllmedium, insbesondere Luft, der entlang aller Kammern verläuft, sowie mit Öffnungen zwischen dem Kanal und den Kammern, die den Eintritt des Füllmediums zum Aufblasen des Folienbeutels in die Kammern gestatten und nach Ende des Füllvorganges durch den Innendruck in den Kammern des Folienbeutels selbsttätig schließen, dadurch gekennzeichnet, daß vom Kanal (10, 14) mit der Kammerfolie (2, 3) verbundene Kanalabzweigungen (14) in jede Kammer (7) führen, die bei jeder Kammer (7) in der Nähe einer Naht gelegen sind, und daß die Öffnungen (4) in die Kammer (7) in diesen Kanalabzweigungen (14) gelegen sind, bei denen bei aufgeblasenem Folienbeutel starke Krümmungen mit Knicken und Falten der Kanalabzweigungen (14) auftreten.

2. Folienbeutel nach Anspruch 1, dadurch gekennzeichnet, daß die Kanalabzweigungen (14) jeweils im Bereich der Ecken der Kammern (7) gelegen sind.

3. Folienbeutel nach Anspruch 1 oder 2, dadurch gekennzeichnet, daß die Kanalabzweigungen (14) für jede Kammer (7) bis in eine Kammerecke geführt sind, und daß dort die Öffnungen (4) zur Kammer (7) gelegen sind.

4. Folienbeutel nach einem der vorliegenden Ansprüche, dadurch gekennzeichnet, daß zumindest die Kanalabzweigungen (14) durch einen Bereich einer Kammerfolie (2, 3) und einen mit dieser verbundenen Folienstreifen (8) gebildet sind.

5. Folienbeutel nach einem der vorhergehenden Ansprüche, dadurch gekennzeichnet, daß der Kanal (10) außerhalb der Kammer (7) gelegen und längs des Randes des Folienbeutels (1) jenseits der die Kammer abschließenden Randnaht (5) angeordnet ist, und daß die Kanalabzweigungen (14) diesseits der Randnaht (5) gelegen sind.

6. Folienbeutel nach einem der vorhergehenden Ansprüche, dadurch gekennzeichnet, daß in den Kanalabzweigungen (14) im Bereich der Öffnungen (4) in die Kammern Engstellen (bei 52, 75; 96, 98) vorgesehen sind.

7. Folienbeutel nach einem der vorhergehenden Ansprüche, dadurch gekennzeichnet, daß die Kanalabzweigungen (14) so angeordnet sind, daß die Strömungsrichtung des Füllmediums dort zumindest teilweise derjenigen im Kanal (10) entgegengerichtet ist.

8. Folienbeutel nach einem der vorhergehenden Ansprüche, dadurch gekennzeichnet, daß die Kanalabzweigungen (14, 14a, 14b) mäanderförmig geführt sind.

9. Folienbeutel nach einem der vorhergehenden Ansprüche, dadurch gekennzeichnet, daß zwischen dem Kanal (10) und den Kanalabzweigungen (14) Zwischenkanäle (73, 85 bis 88, 93, 94) vorgesehen sind, die mit dem Hauptkanal (10) und untereinander durch unterbrochene Nähte (81 bis 84, 91, 92) verbunden sind.

## Claims

1. Inflatable film bag, especially for packaging purposes, having at least one chamber made of an upper and a lower film (chamber films), which are connected together by a continuous seam, having a channel extending in the vicinity of the edge of the film bag (1) for filling the chambers with a filling medium, especially air, which channel extends along all chambers, as well as having openings between the channel and the chambers, which openings permit the ingress of the filling medium into the chambers for inflating the film bag and after completion of the filling process automatically close through the interior pressure in the chambers of the film bag, characterised in that from the channel (10, 14) channel branches (14) connected to the chamber film (2, 3) lead into each chamber (7), which channel branches in each chamber (7) are disposed in the region of a seam, and in that the openings (4) into the chambers (7) are disposed in these channel branches (14), in which channel branches sharp curvatures with kinking and folding of the channel branches (14) occur in the inflated film bag.

2. Film bag according to Claim 1, characterised in that the channel branches (14) are in each case disposed in the region of the corners of the chambers (7).

3. Film bag according to Claim 1 or 2, characterised in that the channel branches (14) for each chamber (7) are guided as far as a chamber corner, and in that the openings (4) to the chamber (7) are disposed there.

4. Film bag according to one of the preceding claims, characterised in that at least the channel branches (14) are formed by a region of a chamber film (2, 3) and a film strip (8) connected thereto.

5. Film bag according to one of the preceding claims, characterised in that the channel (10) is disposed outside the chamber (7) and is arranged along the edge of the film bag (1) beyond the edge seam (5) sealing off the chamber, and in that the channel branches (14) are disposed on the near side of the edge seam (5).

6. Film bag according to one of the preceding claims, characterised in that constrictions (at 52, 75; 96, 98) are provided in the channel branches (14) in the region of the openings (4) into the chambers.

7. Film bag according to one of the preceding claims, characterised in that the channel branches (14) are arranged in such a manner that the flow direction of the filling medium there is at least partly opposite to that in the channel (10).

8. Film bag according to one of the preceding claims, characterised in that the channel branches (14, 14a, 14b) are guided in a meandering manner.

9. Film bag according to one of the preceding claims, characterised in that between the channel (10) and the channel branches (14) intermediate channels (73, 85 to 88, 93, 94) are provided, which are connected to the main channel (10) and to one another through interrupted seams (81 to 84, 91, 92).

## Revendications

1. Poche gonflable, notamment d'emballage, comprenant au moins une chambre formée de feuilles supérieure et inférieure (feuilles de chambre) solidarisées par un cordon de soudure linéaire fermé, un canal s'étendant à proximité du bord de la poche (1) et le long de toutes les chambres, pour remplir les chambres d'un fluide de remplissage, notamment de l'air, et des ouvertures entre le canal et les chambres permettant la pénétration du fluide de remplissage dans les chambres pour gonfler la poche et s'obturant automatiquement grâce à la pression à l'intérieur des chambres de la poche à la fin du gonflage, caractérisée en ce qu'elle comprend des branches (14) solidaires des feuilles de chambre, partant du canal (10, 14), pénétrant dans chaque chambre (7), et disposées à proximité d'un cordon au niveau de chaque chambre (7), et en ce que les ouvertures (4) dans les chambres (7) sont disposées dans ces branches (14), d'où il résulte, lorsque la poche est gonflée, des fortes courbures des branches (14), présentant des coudes et des plis.

2. Poche selon la revendication 1, caractérisée en ce que les branches (14) sont disposées chacune au niveau des coins des chambres (7).

3. Poche selon la revendication 1 ou 2, caractérisée en ce que les branches (14), pour chaque chambre (7), s'étendent jusqu'à un coin, et en ce que les ouvertures (4) dans la chambre (7) sont disposées dans ce coin.

4. Poche selon l'une quelconque des revendications précédentes, caractérisée en ce qu'au moins les branches (14) sont formées par une portion d'une feuille de chambre (2, 3) et par une bande de feuille (8) solidaire de celle-ci.

5. Poche selon l'une quelconque des revendications précédentes, caractérisée en ce que le canal (10) est disposé à l'extérieur de la chambre (7) et le long du bord de la poche (1) de l'autre côté du cordon (5) fermant la chambre, et en ce que les branches (14) sont disposées du côté de ce cordon (5).

6. Poche selon l'une quelconque des revendications précédentes, caractérisée en ce qu'il est prévu des étranglements (52, 75 ; 96, 98) dans les branches (14) au niveau des ouvertures (4) dans les chambres.

7. Poche selon l'une quelconque des revendications précédentes, caractérisée en ce que les branches (14) sont disposées de manière que le sens d'écoulement du fluide de remplissage y est au moins partiellement de sens contraire à celui du canal (10).

8. Poche selon l'une quelconque des revendications précédentes, caractérisée en ce que les branches (14, 14a, 14b) sont en forme de méandre.

9. Poche selon l'une quelconque des revendications précédentes, caractérisée en ce qu'il est prévu des canaux intermédiaires (73, 85 à 88, 93, 94) entre le canal (10) et les branches (14), qui sont reliés au canal principal (10) et entre eux par l'intermédiaire de cordons interrompus (81 à 84, 91, 92).
